# EUROPÄISCHE PATENTSCHRIFT

(11) **EP 0 640 951 B1**
(45) Veröffentlichungstag und Bekanntmachung des Hinweises auf die Patenterteilung: **28.04.1999**
(21) Anmeldenummer: 94112211.1
(22) Anmeldetag: 04.08.1994
(51) Int. Cl.: G10K 11/16

(54) **Mehrschichtiges schalldämmendes und -dämpfendes Bauteil**
Multiple layer sound damping building element
Elément de construction à plusieurs couches pour l'atténuation du son

(30) Priorität: 25.08.1993 DE 9312734 U
(43) Veröffentlichungstag der Anmeldung: 01.03.1995
(73) Patentinhaber: M. Faist GmbH & Co. KG, 86381 Krumbach (DE)
(72) Erfinder: Roller, Manfred, D-89168 Niederstotzingen (DE); Brohmann, Lutz, D-89349 Burtenbach (DE); Lahner, Stefan, Dr., D-86381 Krumbach (DE)
(74) Vertreter: Müller, Hans-Jürgen, Dipl.-Ing.

(56) Entgegenhaltungen:
- EP-A- 0 214 559
- EP-A- 0 454 949
- GB-A- 2 027 255
- GB-A- 2 092 975
- PATENT ABSTRACTS OF JAPAN vol. 15 no. 39 (M-1075) ,30.Januar 1991 & JP-A-02 276629 (HAYAKAWA RUBBER ) 13.November 1990,

## Beschreibung

Die Erfindung bezieht sich auf ein mehrschichtiges schalldämmendes und schallabsorbierendes Bauteil mit einer Trägerschicht, einer porösen Weichschicht und einer diese ein- oder beidseitig abdeckenden dünnen Abdeckschicht der im Oberbegriff des Anspruchs 1 genannten Gattung.

Ein solches Bauteil ist bereits bekannt (DE-OS 37 34 312). Das bekannte Bauteil wird als Abdeckhaube für Brennkraftmaschinen, beispielsweise einen Motor, verwendet mit dem Zweck, die vom Motor abstrahlenden Schallwellen weitgehend an der Ausbreitung zu hindern. Die Weichschicht besteht bei dem bekannten Bauteil aus Gummi, das mit Füllstoffen gefüllt ist und eine niedrige Shore-A-Härte aufweist. Als Füllstoff wird Bariumsulfat verwendet, weshalb die Weichschicht als sogenannte "Schwerschicht" Schallwellenenergie vernichtend wirksam ist.

Die Trägerschicht und die Abdeckschicht des bekannten Bauteils bestehen aus einer Kunststoff- oder Metallfolie, so daß das dreiteilige Bauteil einen Sandwich-Aufbau aufweist.

Darüber hinaus ist ein zweiteiliges Bauteil bekannt (DE-OS 38 41 187), bei dem an einer Seite einer aus Schaum- oder Faserstoff bestehenden Absorptionsschicht eine biegeweiche Schwerschicht aus Polypropylen (PP) angeordnet ist. Die Absorptionsschicht ist so an ein Fahrzeugblech angelegt, daß aus dem Blech und den beiden Schichten wiederum eine Art Sandwich-Aufbau entsteht. Im Bereich der Durchgangsöffnung für beispielsweise eine Motorwelle, ein Kabel oder ein Heizungsrohr sind die Absorptionsschicht und die Schwerschicht durchbrochen, so daß sich eine ringförmige Kammer zwischen dem Sandwich-Aufbau und dem hindurchgeführten Bauelement ergibt.

Aus EP-A-0 454 949 ist Luftschall absorbierendes Formteil bekannt, bei dem in eine Schicht eingebettete Helmholtz-Resonatoren zur Anwendung kommen.

Der Erfindung liegt die Aufgabe zugrunde, die schalldämmenden Eigenschaften des Bauteils trotz einfacher Herstellbarkeit zu verbessern. Dabei ist es erwünscht, die Schalldämmfunktion an bestimmte Frequenzbereiche noch besser anpassen zu können.

Die Erfindung ist im Anspruch 1 gekennzeichnet und in Unteransprüchen sind weitere Ausbildungen derselben beansprucht. Bevorzugte Ausbildungsformen sind in der folgenden Figurenbeschreibung noch weiter erläutert.

Gemäß der Erfindung besteht die poröse Weichschicht im wesentlichen aus Schaumstoff. Dabei wird ein System von Kammern gebildet, die jeweils einen ausreichend großen Kammerraum und in Richtung zu den eintreffenden Schallwellen Zutrittsöffnungen aufweisen, so daß von dort in die Kammern eintretende Wellen Resonanzerscheinungen in den Kammern (zusammen mit den die Kammern begrenzenden Wänden) initiieren. Das aus der porösen Weichschicht und der insbesondere als Dämmschicht ausgebildeten Trägerschicht bestehende System vernichtet dann einen verhältnismäßig großen Teil der Schallenergie, ohne daß diese an die andere Seite des Bauteils übertragen wird. Dabei ist dafür gesorgt, daß die Zutrittsöffnungen außen mittels der dünnen Abdeckschicht abgedeckt sind, so daß die der Schallquelle zugewandte Seite des Bauteils im wesentlichen glatt ist, die Schallwellen aber dennoch ohne wesentliche Behinderung durch die betreffenden Teile der Abdeckschicht in die Zutrittsöffnungen und durch diese hindurch in die Kammern eindringen können.

Die Kammern sind insbesondere nach Art von Helmholtz-Resonatoren ausgebildet.

Für manche Anwendungsfälle kann es sich empfehlen, die der Trägerschicht zugewandte Seite der Kammern durch eine zusätzliche Zwischenschicht abzuschließen, welche die Weichschicht von der Trägerschicht trennt.

Durch die Wahl der Größe und Geometrie der Kammern und deren Abstand voneinander, d.h. der Dicke der porösen Weichschicht zwischen benachbarten Kammern, kann das Schallabsorptionsvermögen des Bauteils je nach den gewünschten Frequenzbereichen sehr gezielt gesteuert werden. Dabei empfiehlt es sich im Falle relativ schmaler Frequenzbänder, die Weichschicht mit Kammern etwa gleicher Größe auszustatten. Soll dagegen die Schallabsorption über ein breiteres Frequenzband wirksam sein, empfiehlt es sich, die Abmessungen der Kammern unterschiedlich zu wählen, d.h. verschieden große Kammern längs der Weichschicht zu verteilen. Die Formung der Kammern und der zwischen diesen befindlichen Teilen der Weichschicht erfolgt zweckmäßigerweise in Form eines Rasters mit Quer- und Längsstegen des Weichschichtmaterials, das eine gute Absorberfunktion aufweisen soll. Der bevorzugte Werkstoff für die poröse Weichschicht ist Polyurethan.

Die Trägerschicht wird bevorzugt durch eine schalldämmende Schwerschicht gebildet, welche mit schweren Füllstoffen, wie Schwerspat, gefüllt ist und beispielsweise aus PU-Schwerschaum bestehen kann. Auch glasmattenverstärkte thermoplastische Kunststoffe, SMC (sheet mould compounds), spritzgegossener Kunststoff und Metallbleche eignen sich als Trägerschicht.

Die Verbindung der Weichschicht mit der im wesentlichen starren Trägerschicht ist auf unterschiedliche Weise möglich, beispielsweise durch Verkleben, Verschweißen, Verpressen und Clipsen. Nach einer besonderen Ausbildung der Erfindung empfiehlt es sich, die Schichten durch solche Verbindungselemente miteinander zu verbinden, welche ein Trennen der Einzelschichten bei Bedarf mit einfachen Mitteln erlauben. Dieser Aspekt der Erfindung ist vor allem bei der Wiederverwendung der Einzelschichten bzw. der Materialien derselben und für die Entsorgung wichtig. Solche Verbindungselemente können Kleberschichten sein, die durch thermische Behandlung ihre klebende Funktion verlieren. Auch Doppelschichten in Form einer dünnen PP-Folie und einer dünnen PU-Folie eignen sich zu diesem Zweck.

Die Verbindung der Einzelschichten miteinander muß nicht über die gesamten Berührungsflächen erfolgen; für diesen Aspekt der Erfindung empfiehlt es sich sogar, mehrere Verbindungselemente im Abstand voneinander fleckenartig über den Kontaktbereich der Einzelschichten untereinander zu verteilen, um das Auftrennen zu begünstigen. Das Flächenverhältnis der wirksamen Verbindungselemente zur Gesamtfläche der gegenüberliegenden Teilschichten sollte weniger als 15 % betragen.

Ausführungsbeispiele der Erfindung werden nun anhand der Zeichnung erläutert, dabei zeigen:
- Fig. 1: einen schematische Teilschnitt durch ein erfindungsgemäßes Bauteil;
- Fig. 2: einen Randabschnitt nach einer weiteren Ausbildung der Erfindung im Querschnitt;
- Fig. 3: einen schematischen Querschnitt einer anderen Ausbildung der Erfindung;
- Fig. 4: eine verkleinerte Draufsicht auf ein erfindungsgemäßes Bauteil;
- Fig. 5: einen schematischen Teilschnitt A-A von Fig. 4.

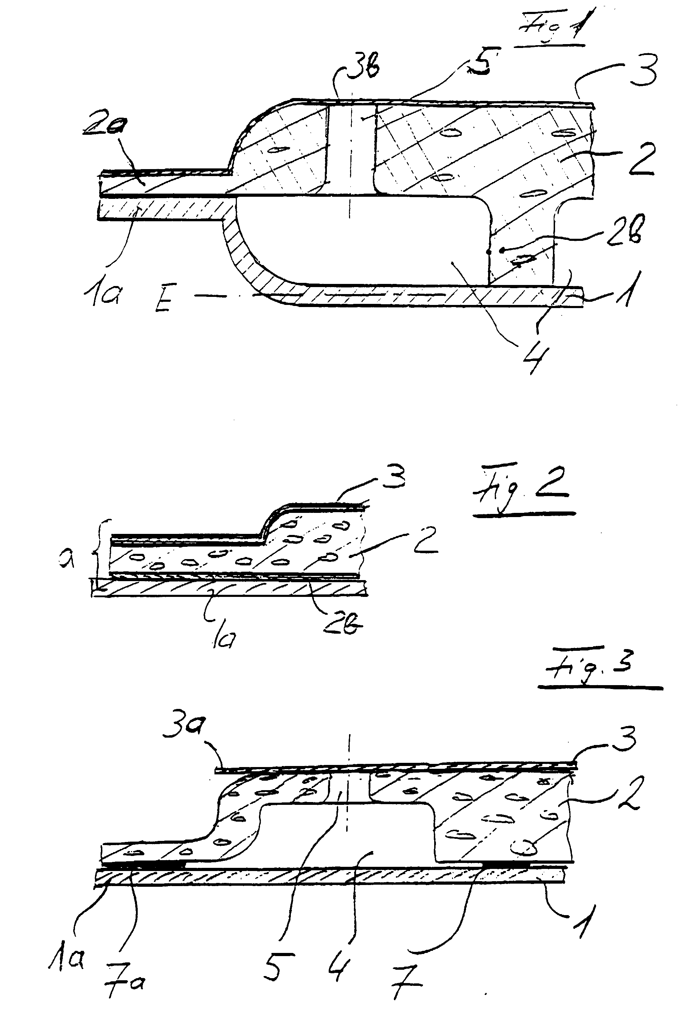

Gemäß Fig. 1 ist eine Trägerschicht 1 aus PU-Schwerschaum im Randbereich la aus der eigentlichen Ebene E der Trägerschicht 1 etwas herausgewölbt und dort mit dem Randbereich 2a der eine Kernschicht bildenden Weichschicht 2 verbunden, welche aus weichem PU-Schaum einer Dichte von ca. 50 - 100 g/dm³ besteht, an der der Trägerschicht 1 abgewandten Seite der Weichschicht 2 ist diese mittels einer folienartigen dünnen Abdeckschicht 3 abgedeckt. Die Weichschicht 2 füllt den Zwischenraum zwischen der Trägerschicht 1 und der Deckschicht 3 nicht voll aus, sondern weist eine Anzahl von Kammern 4 auf, von denen in Fig. 1 lediglich eine im Querschnitt dargestellt ist. Der Innenraum der Kammer 4 ist mit dem Außenraum jenseits der Abdeckschicht 1 durch die Zutrittsöffnung 5 hinsichtlich der maßgebendsten Schallwellen verbunden, während Staub, Flüssigkeit und dergleichen Teilchen durch die Zutrittsöffnungen 5 nicht in die Kammer 4 eindringen kann, da die Abdeckschicht 3 dies verhindert. Die dünne Abdeckschicht 3 besteht aus einer dehnbaren Folie und bildet am Ende der Zutrittsöffnung 5 ein dünnes Häutchen 3b, das dem Schallwellendurchtritt kein regelrechtes Hindernis in den Weg legt, sondern nach Art einer dünnen Membrane die Schallwellen weiterleitet. Benachbarte Kammern 4 sind durch Stege 2b der Weichschicht 2 voneinander getrennt.

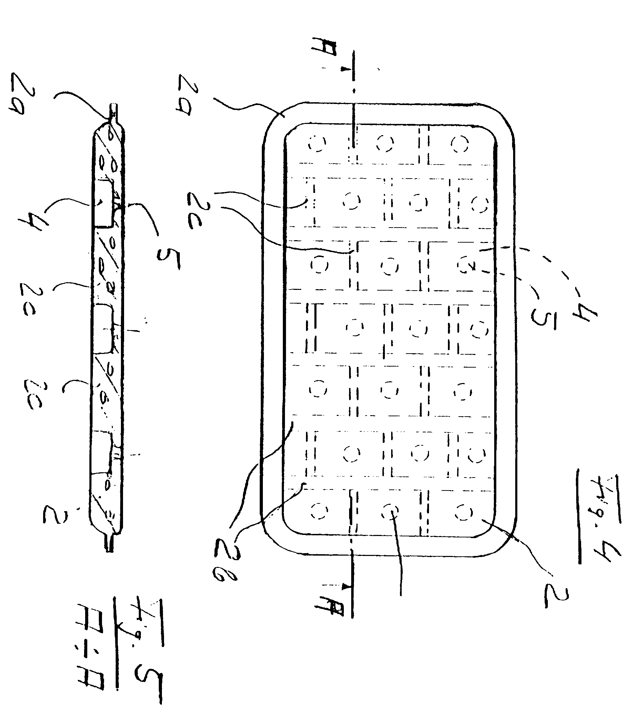

Gemäß Fig. 2 ist die Weichschicht 2 an der der Abdeckschicht 3 abgewandten Seite mit einer dünnen Zwischenschicht 2b überzogen, welche die Weichschicht 2 von der in Fig. 2 nicht gezeigten Trägerschicht 1 trennt.

Gemäß Fig. 3 ist die Weichschicht 2 mit der Abdeckschicht 3 verbunden, ebenso wie die Weichschicht 2 nur über fleckenartige Verbindungselemente 7, 7a mit der Trägerschicht 1 in Verbindung steht. Ein Randteil 3a der Abdeckschicht 3 steht gewissermaßen als "Zuglasche" zur Verfügung, um im Bedarfsfall - insbesondere bei der Entsorgung der nicht mehr gebrauchten Bauteile - die Weichschicht 2 leicht von der Trägerschicht 1 wieder abziehen zu können. Dabei empfiehlt es sich, solche Verbindungselemente 7 und 7a (Verbindungselement im Randbereich 1a) zu verwenden, die bei Überschreiten einer Temperatur von beispielsweise 100° Celsius die verbindende Funktion nicht mehr erfüllen, so daß sich die Einzelschichten leicht voneinander ablösen. Hierdurch wird ermöglicht, daß die Einzelschichten auch aus unterschiedlichen Materialien bestehen können, wodurch deren Funktion noch besser erfüllt werden kann, ohne daß beim Entsorgen Probleme der Trennung der unterschiedlichen Materialien voneinander bestehen.

Gemäß der in Fig. 4 gezeigten schematischen Draufsicht sind in der Weichschicht 2 Reihen von Kammern 4 angeordnet, welche durch Längsstege 2b und Querstege 2c voneinander getrennt sind.

Das erfindungsgemäße Bauteil kann für zahlreiche schalldämmende und schallabsorbierende Zwecke verwendet werden: so ist es beispielsweise in Kraftfahrzeugen einbaubar, um die Schallwellenausbreitung vom Motorraum in den Fahrgastraum und in der Umwelt zu verhindern oder zumindest wesentlich zu vermindern. Darüber hinaus wird das erfindungsgemäße Bauteil auch in Industrieanlagen für schalldämmende Wände, bei Kompressoren für schalldämmende Gehäuse und Deckel und auch in Versuchsanlagen verwendet, in denen große Schallpegel auftreten. Darüber hinaus ist es auch im Freiland aufstellbar, um an beispielsweise Bahnstrecken oder Autobahnen oder dergleichen stark befahrenen Straßen angrenzende Wohnbereiche lärmmäßig besser abzuschirmen. In solchen Fällen bereitet es keine Schwierigkeit, die Trägerschicht und die Abdeckschicht genügend wetterfest auszubilden.

## Patentansprüche

1. Mehrschichtiges schalldämmendes und -absorbierendes Bauteil mit einer im wesentlichen starren Trägerschicht (1), einer ein System von Kammern (4) bildenden Kunststoffschicht, deren Kammern (4) als Resonanz- bzw. Helmholtz-Kammern mit unterschiedlichen Resonanzfrequenzen ausgebildet sind und sich über Zutrittsöffnungen (5) zum Schallwelleneinfall öffnen, und mit einer an der der Trägerschicht (1) abgewandten Seite abdeckenden Abdeckschicht (3)
**dadurch gekennzeichnet,**
daß die Kunststoffschicht des Kammersystems derart als poröse Weichschicht (2) ausgebildet ist, daß die Kammerwände im Verbund mit der schallabsorbierenden Wirkung der porösen Weichschicht (2) zur Schallwellenenergieminderung beitragen, und daß die Zutrittsöffnungen (5) durch die Abdeckschicht (3) abgedeckt sind, wobei die Abdeckschicht folienartig oder membranartig dünn ausgebildet ist.

2. Bauteil nach Anspruch 1,
**dadurch gekennzeichnet,**
daß die Dicke sowie der Werkstoff der Weichschicht (2) und/oder der Trägerschicht (1) derart ausgewählt sind, daß die Weichschicht (2) Schallwellenenergie vernichtet und die Trägerschicht (1) Schall dämmt.

3. Bauteil nach Anspruch 1 oder 2,
**dadurch gekennzeichnet,**
daß zwischen die Weichschicht (2) und die Trägerschicht (1) eine die Kammern (4) von der Trägerschicht (1) trennende Zwischenschicht (2b) eingefügt ist.

4. Bauteil nach einem der vorhergehenden Ansprüche,
**dadurch gekennzeichnet,**
daß die Trägerschicht (1) aus einer Schwerschicht besteht.

5. Bauteil nach Anspruch 4,
**dadurch gekennzeichnet,**
daß die Trägerschicht (1) aus mit schweren Füllstoffen, wie Schwerspat, stark gefülltem PU-Schaum, besteht.

6. Bauteil nach einem der vorhergehenden Ansprüche,
**dadurch gekennzeichnet,**
daß die Trägerschicht (1) aus glasmattenverstärktem thermoplastischem Kunststoff besteht.

7. Bauteil nach einem der vorhergehenden Ansprüche,
**dadurch gekennzeichnet,**
daß die Weichschicht (2) mit der Trägerschicht (1) über solche Verbindungselemente (7) miteinander verbunden ist, die ein Trennen der verbundenen Schichten erlauben.

8. Bauteil nach Anspruch 7,
**dadurch gekennzeichnet,**
daß Verbindungselemente (7) aus einer solchen Kleberschicht bestehen, die durch thermische Behandlung wieder lösbar sind.

9. Bauteil nach Anspruch 7,
**dadurch gekennzeichnet,**
daß Verbindungselemente (7a) in Randbereichen (la) der Trägerschicht (1) lösbar angeordnet sind.

10. Bauteil nach Anspruch 7,
**dadurch gekennzeichnet,**
daß mehrere Verbindungselemente (7) im Abstand voneinander fleckenartig über den Kontaktbereich der Weichschicht (2) und der Trägerschicht (1) verteilt sind.

## Claims

1. A multi-layered sound-insulating and sound-absorbing structural component comprising a substantially rigid carrier layer (1), a plastic layer constituting a system of chambers (4), whose chambers (4) are configured as resonance or, respectively, Helmholtz chambers having different resonance frequencies and open over access openings (5) for incident sound waves, and a cover layer (3) covering the side facing away from the carrier layer (1),
**characterised in**
that the plastic layer of the chamber system is configured as a porous soft layer (2) in such a manner that the chamber walls contribute, in combination with the sound-absorbing action of the porous soft layer (2), to the reduction of sound wave energy, and that the access openings (5) are covered by the cover layer(3), said cover layer being configured to be film-like or membrane-like thin.

2. Component according to claim 1,
**characterised in**
that the thickness as well as the material for the soft layer (2) and/or the carrier layer (1) are configured such that the soft layer (2) destroys sound wave energy and the carrier layer (1) insulates sound.

3. Component according to claim 1 or 2,
**characterised in**
that an intermediate layer (2b) separating the chambers (4) from the carrier layer (1) is inserted between the soft layer (2) and the carrier layer (1).

4. Component according to any of the preceding claims,
**characterised in**
that the carrier layer (1) consists of a heavy layer.

5. Component according to claim 4,
**characterised in**
that the carrier layer (1) consists of PU foam strongly filled with heavy fillers like heavy spar.

6. Component according to any of the preceding claims,
**characterised in**
the carrier layer (1) consists of glass-mat reinforced thermoplastic plastic.

7. Component according to any of the preceding claims,
**characterised in**
that the soft layer (2) is connected with the carrier layer (1) via such connecting elements (7) which permit a separation of the connected layers.

8. Component according to claim 7,
**characterised in**
that the connecting elements (7) consist of such an adhesive layer which may be detached by thermal treatment.

9. Component according to claim 7,
**characterised in**
that the connecting elements (7a) are detachably disposed in edge regions (1a) of the carrier layer (1).

10. Component according to claim 7,
**characterised in**
that a plurality of connecting elements (7) are distributed, at a mutual spacing and in a spot-like manner, over the contact region of the soft layer (2) and the carrier layer (1).

## Revendications

1. Elément de construction à plusieurs couches d'isolation phonique et à absorption acoustique comportant une couche de support (1) sensiblement rigide, une couche en matière plastique formant un système de chambres (4), dont les chambres (4) sont réalisées en tant que chambres de résonance ou chambres de Helmholtz avec des fréquences de résonance différentes et s'ouvrent vers l'onde sonore incidente, par des ouvertures d'entrée (5) et comportant une couche de couverture (3) recouvrant la face tournée à l'opposé de la couche de support (1), caractérisé en ce que la couche en matière plastique du système de chambres est réalisée en tant que couche souple (2) poreuse, de manière que les parois des chambres contribuent à réduire l'énergie des ondes sonores, en liaison avec l'effet d'absorption acoustique de la couche souple (2) poreuse, et en ce que les ouvertures d'entrée (5) sont recouvertes par la couche de couverture (3), la couche de couverture étant mince, du type feuille ou membrane.

2. Elément de construction selon la revendication 1, caractérisé en ce que l'épaisseur ainsi que le matériau de la couche souple (2) et/ou de la couche de support (1) sont choisis de manière que la couche souple (2) annule l'énergie des ondes sonores et que la couche de support (1) isole du son.

3. Elément de construction selon la revendication 1 ou 2, caractérisé en ce qu'une couche intermédiaire (2b), séparant les chambres (4) de la couche de support (1), est intercalée entre la couche souple (2) et la couche de support (1).

4. Elément de construction selon l'une des revendications précédentes, caractérisé en ce que la couche de support (1) est constituée d'une couche lourde.

5. Elément de construction selon la revendication 4, caractérisé en ce que la couche de support (1) est constituée de charges telles que de la barytine, de mousse de polyuréthanne fortement chargée.

6. Elément de construction selon l'une des revendications précédentes, caractérisé en ce que la couche de support (1) est en matière thermoplastique renforcée avec des mats de fibres de verre.

7. Elément de construction selon l'une des revendications précédentes, caractérisé en ce que la couche souple (2) est assemblées à la couche de support (1) par des éléments d'assemblage (7) qui permettent une séparation des couches assemblées.

8. Elément de construction selon la revendication 7, caractérisé en ce que des éléments d'assemblage (7) sont constitués d'une couche de colle qui peut à nouveau être détachée par traitement thermique.

9. Elément de construction selon la revendication 7, caractérisé en ce que des éléments d'assemblage (7a) sont disposés de manière détachable dans des zones de bordure (1a) de la couche de support (1).

10. Elément de construction selon la revendication 7, caractérisé en ce que plusieurs éléments d'assemblage (7) sont répartis espacés les uns des autres par taches, sur la zone de contact de la couche souple (2) et de la couche de support (1).
